# EUROPEAN PATENT APPLICATION

(11) **EP 1 219 745 A1**
(43) Date of publication of application: **03.07.2002**
(21) Application number: 01205161.1
(22) Date of filing: 28.12.2001
(51) Int. Cl.: D06N 7/00, E04C 2/00, E04F 13/14, E01C 5/22, B29C 70/64

(54) **Process for obtaining plates of plastic and elastic material including different kinds of elements suitable to form a surface with raised portions usable for various purposes.**

(30) Priority: 28.12.2000 IT PN000078
(71) Applicant: Atra S.r.l., 33080 San Quirino (PN) (IT)
(72) Inventor: Vladimiro, Lenardi, 33080 San Quirino (PN) (IT)
(74) Representative: Da Riva, Ermanno

(57) **Abstract**

Process for obtaining plates of plastic and elastic material including different kinds of elements suitable to form a surface with raised portions usable for various purposes.

The process comprises substantially the following steps: applying a "base" (20) of suitable fabric upon the bottom of a "form" (1); flowing on the fabric a resin suitable to form a layer (22) in which are successively placed materials (23) which will result partially enclosed in the layer (22) to form different kinds of surfaces for different kinds of purposes.

## Description

The present invention relates to a process for obtaining "plates" of plastic and elastic material including different kinds of elements and materials in order to form surfaces with raised portions having different shape and/or sort according to the used materials and to the variuos purposes.

Obviously, such process can be used and/or applied for obtaining different kinds of elements for various purposes, as for example, products for physical wellbeing and for alternative or natural medicina, as for example particular kinds of carpets, slippers ecc..

With the process forming the object of the invention it will be possible to obtain also decorative elements and/or various furniture objects for ornamental purposes, as well as elements for building components, as for example covering materials for lining walls by means of curvilinear, convex or concave furring tiles, or bathroom sets and various accessories.

Such process is mainly composed of simple elements which are associated one another and it is practically composed of a first element, named "base" and preferably constituted by a reticular and suitably broad tissue which is suitable to give consistency to the final element. In addition to this element named "base" , there is a special resin of syntetic material, such as a plastic polymer.

Such plastic polymer can be of various kind but always with suitable features of softness, flexibility and elasticity which characterize the component named "bed" which solidly includes the "base".

Moreover, the upper layer of the resin includes a raising third element which can be formed by various elements, as for example stones made smooth and round by the action of water , and/or other elements, as for example, wood elements or metallic balls. It often happens that the physical wellbeing field , the alternative or natural medicina field or the furniture field as well as building field, are seeking products which are equivalent of the above described embodiment, but nearly all of these products present some drawbacks and disadvantages either in the alternative or natural medicina field or in the other fields.

For instance, there are rugs or rolls for the plantar massage obtained by means of syntetic materials which are normally giving scanty results whether on the side of the comfort or of the physical wellbeing of the user.

As an example, there are ultrasonic massaging rugs, obtainable by means of known plastics pressure thermoforming processes, which present a vibrating surface with little protuberances that are moved in various way and by various means.

Such solution certainly does not riproduce the features of a natural stony ground. The seats are not very comfortable and satisfactorily ergonomic and therefore they do not offer the rational posture as well as the healthy transpiration offered by a natural seat located in natural conditions.

Moreover, decorative objects and other various utilizations, as those in the accessories field and in particular in the building field, are not easily realizable.

On the contrary, the realizations in the accessories field are normally not very original aesthetically.

As an example, there are different kinds of covering materials for lining walls that are hardly usable for lining convex or concave walls because the covering materials are not adaptable to the surfaces to be covered.

In the accessories field, for example in the bathroom accessories field, there are two associated functions, i.e. a minor aesthetic function and a physical wellbeing function.

More precisely, some bathroom objects, made according to the present invention, have relaxation and/or curative properties according to the alternative or natural medicina while the same objects made according a traditional process have not such properties.

It is the aim of the present invention to overcome the above stated drawbacks by providing a process which is forming the object of the present invention.

In order to better understand the features and the advantages attainable by the process forming the object of the present invention, this process is hereinafter described, by way of a not limitative example only, and with reference to the accompanying drawing, wherein :
- the Figure 1 is a perspective view of a possible conformation of a mold usable for obtaining a plate according to the invention;
- the Figure 2 is a sectional view of the same mold taken along section line I - I in Figure 1 illustrating the use of the mold in order to obtain a plate;
- the Figure 3 is a perspective view of a plate obtained by means of the mold in Figure 1;
- the Figure 4 is a sectional view of the plate of Figure 3 taken along section line II - II in Figure 3;

In the above mentioned figures, the common items are marked with the same reference numerals.

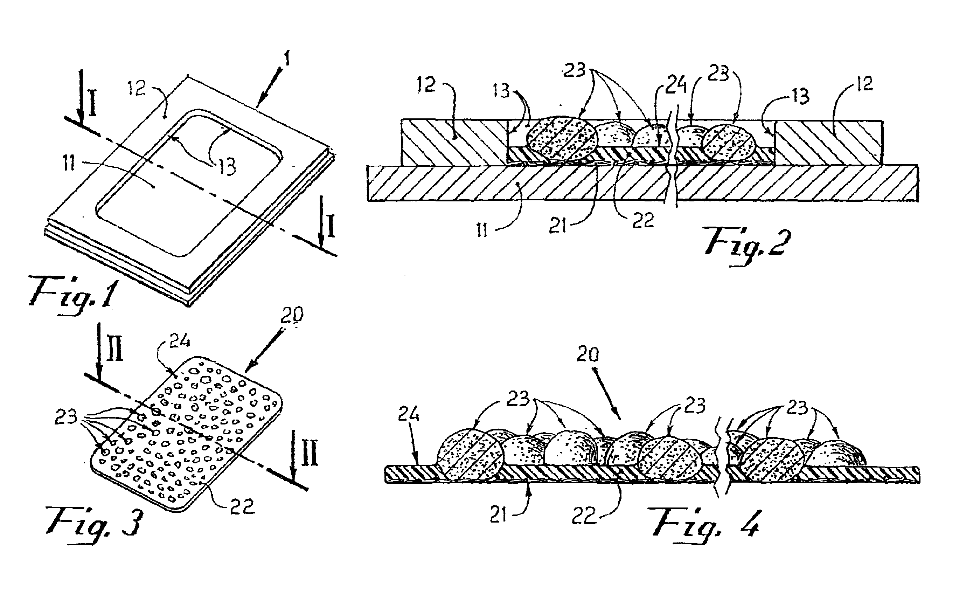

As it can be seen from the above-mentioned figures and with particular reference to Figures 1 and 2, the execution of the process forming the object of the present invention requires a "form" 1 that is a real mold formed by a flat bottom 11 and an upward protruding frame 12 defining a basin 14 with its inner perimetrical edge 13.

It is clear that variations may be made to the described embodiment any also the contour defined by the perimetrical edge 13 will change according to the shape of the perimetrical contour of the "plate" to be obtained.

As it can be seen from the Figure 2, the layer of plastic material including raising elements ( stones ) will be obtained in the following way:

The contour of the layer to be obtained is initially defined by means of a "orm" of the kind illustrated in the Figure 1 or by equivalent means.

Such "forms" are not real, expensive and complicated molds and serve to defined the shape of the plate 20 to be obtained.

The process then involves applying a suitable layer or "base" 21, constituted by a preferred fabric with a suitable weft, upon the bottom of the basin 14 resulting from said "form" 1.

The width of the weft of the above mentioned fabric can be changed according to the requirements and/or the needs of the purpose.

After the application of the "base" 21, a suitable resin is flowed in the basin 14. Such a resin is preferably a liquid constituted by a suitable plastic material, such as a plastic polymer or copolymer, product of polymerization of one two, three or more known substances, or other kind of substances with the addition of accelerator catalysts, but always a resin offering suitable features of elasticity, softness and comfort.

After flowing the liquid plastic material, it results a suitably thick layer 22 in which are inserted various materials 23 , e.g. stones or little pieces of wood or other kind of materials.

Such materials 23 result partly immersed into the above described layer 22 of liquid plastic material that, after some time changes into the solid state and binds them in the resulting plate 24.

Clearly, such various materials 24 are partly protruding from the surface of said plate 20 in such a way as to form raised portions for different purposes and just for well defined fields.

Clearly, such various materials 24 remain permanently fixed into the layer of plastic material that after a certain setting time will consolidate the constituting polymer.

For example, stones in general and with a certain dimensional constancy are applicable for alternative or natural medicina purposes and physical wellbeing purposes, or little balls having homogeneous size or various suitable sizes, or particular pieces of wood or of other suitable materials with heterogeneous shapes. Moreover, for acessories purposes could be applicable the above mentioned elements as well as shells or other natural materials.

Moreover, it is to be noted that such plastic material has biological compatibility, it does not change the physical conditions of foodstuff and does not induce an allergic state in humans or animals.

Above all, such process allows to obtain particular planar elements with raised portions by means of simple and cheap resins having suitable features for giving a better support to the parts of the human body in all conditions, as an example, either the sitting or the rational support of the foot or of any other kind o support.

Moreover, the resins and the process forming the object of the present invention allow to obtain the suitable plasticity and elasticity avoiding the high costs which are due to other existing materials requiring different and more expensive processes.

From what stated it is clear that the process according to the present invention allows to obtain a plate 20, composed of a "layer" 22 one side of which presents raised elements 23 which are integrally included in the plate and the other side of which , i.e. its bottom side, presents a containment fabric with a suitable weft that gives a high degree of solidity to the whole.

Moreover, such surface presenting raised parts can be obtained by applying completely different materials, as stones having a smooth and round shape, different kinds of wood presenting various sizes , metallic balls, plastic elements ecc..

Therefore, the layer presenting the raised parts can be advantageously used in completely different fields for obtaining , with a cheap expenditure and with poor but natural materials, great effects at many points of view, either for application in the alternative or natural medicina field or in the physical wellbeing field and also for obtaining particular aesthetic effects in the objects field, either for the kitchen, for the bathroom or for other rooms.

A further advantage arising from such process is to be found in the fact that not only it facilitates the walls lining of a building in a shorter time and with a sheaper expense than those allowed by other traditional methods. , but also it a lows to obtain an aesthetic effect without solution of continuity on the concave or convex surfaces thereby enabling homogeneous and continuous surface without interruptions, connections, joints and other aesthetic imperfections that are not avoidable by the means of common use in the traditional processes.

It is well understood that modifications and variations may be made to the process forming the object of the present invention without departing however from the scope defined by the following claims with reference to the accompanying drawings and thence from the protection extent of the present industrial invention.

## Claims

1. Process for obtaining plates of plastic elastic material including different kinds of elements suitable to form a surface with raised portions usable for variuos purposes, such process being **characterized in that** it allows to obtain a plate (20) composed by a "base" (21) of a suitable fabric with a suitable weft for the intended purposes and uses , such process comprises the step of inserting such "base" (21) in a "form" (1) that is suitable to define the shape and the dimensions of the desired plate (20); flowing a liquid plastic material to form a suitably thick layer and finally placing and partially enclosing of suitable materials (23) as stones (preferably pebbles), or balls , little pieces of wood or other natural materials.

2. Process according to the claim 1, **characterized in that** it allows to obtain devices and/or elements which are suitable to the use in the alternative or natural medicina field, allowing the production of carpets , slippers , and surfaces in general which are suitable to restore, as an example, the circulatory functions in a so natural manner as that possible only by means of walks or contacts with natural elements.

3. Process according to the claim 1, **characterized in that** it allows to obtain devices and/or elements which are suitable to the use in the decorative field, either the decorative field for obtaining bathroom accessories , or various objects, or furniture complements , or small accessories for kitchen, as saucers , mats for pots, supports for different kinds of tools for culinary use.

4. Process according to the claim 1, **characterized in that** it allows to obtain devices and/or elements which are suitable to the use in the building field for lining facades , walls, columns with circular, rectangular or polygonal cross-section, as well as concave and/or convex surfaces.

5. A process substantially as hereinbefore described and claimed and for the intended purposes.
